Europäisches Patentamt

European Patent Office

Office européen des brevets

(19)

(11) Publication number: **0 229 032 B1**

(12) **EUROPEAN PATENT SPECIFICATION**

(45) Date of publication of patent specification: **25.11.92** (51) Int. Cl.5: **H04N 5/45**

(21) Application number: **87300088.9**

(22) Date of filing: **07.01.87**

(54) Television receivers.

(30) Priority: **07.01.86 JP 1125/86**

(43) Date of publication of application:
**15.07.87 Bulletin 87/29**

(45) Publication of the grant of the patent:
**25.11.92 Bulletin 92/48**

(84) Designated Contracting States:
**DE FR GB NL**

(56) References cited:
**US-A- 4 259 690**

**PATENT ABSTRACTS OF JAPAN, vol. 8, no. 107 (E-245)[1544], 19th May 1984; & JP-A-59 23 682 (TOKYO SHIBAURA DENKI K.K.) 07-02-1982**

**PATENT ABSTRACTS OF JAPAN, vol. 4, no. 63 (E-10)[545], 13th May 1980; & JP-A-55 34 511 (HITACHI SEISAKUSHO K.K.) 11-03-1980**

**PATENT ABSTRACTS OF JAPAN, vol. 5, no. 78 (E-058)[120], 22nd May 1981; & JP-A-56 27 573 (SONY K.K.) 17-03-1981**

(73) Proprietor: **SONY CORPORATION**
**7-35 Kitashinagawa 6-chome Shinagawa-ku Tokyo 141(JP)**

(72) Inventor: **Hakamada, Kunio c/o Patent Division**
**Sony Corporation 6-7-35 Kitashinagawa Shinagawa-ku Tokyo 141(JP)**
Inventor: **Wakabayashi, Hideo c/o Patent Division**
**Sony Corporation 6-7-35 Kitashinagawa Shinagawa-ku Tokyo 141(JP)**

(74) Representative: **Cotter, Ivan John et al**
**D. YOUNG & CO. 10 Staple Inn London WC1V 7RD(GB)**

EP 0 229 032 B1

## Description

This invention relates to television receivers.

A so-called picture-in-picture television receiver, in which a sub-picture screen is displayed within a main picture screen in an inset or picture-in-picture fashion, has been previously proposed. As is described hereinbelow, the picture-in-picture television receiver is provided with a memory to reproduce a picture on the sub-picture screen. Video signals are written into the memory and read out from the memory for display. If writing of a video signal into the memory and reading of the same video signal out of the memory are alternately carried out continuously, a real moving picture can be displayed on the sub-picture screen.

According to the previously proposed picture-in-picture television receiver, the following signal sources can be employed for the main picture displayed on the main picture screen and the sub-picture displayed on the sub-picture screen: a high frequency signal from, for example, a television broadcast, a community aerial television (CATV) arrangement and the like, and an external (base band) video signal from an apparatus such as a video tape recorder (VTR), a video disc player and so on.

With respect to television broadcasts, it often happens that two interesting programmes, such as a football programme from a certain broadcast station and a golf programme from other broadcast station, are broadcast simultaneously. In such a case, some previously proposed picture-in-picture television receivers cannot effectively utilise the sub-picture function to reproduce the two separate programmes on the main and sub-picture screens. So, it is desirable that a picture-in-picture television receiver be capable of receiving and simultaneously displaying high frequency signals of two systems.

However, if the picture-in-picture television receiver is provided with two tuners for that purpose, and if channel selection keys from "0" to "9" (ten keys), and an up key and a down key for incrementing and decrementing the channel number, are provided for each tuner, the keys become too numerous, causing confusion to and misoperation by the user and so on.

In addition, since the television receiver and/or a remote controller for the receiver has a restricted area in which operation keys used for various kinds of control operations can be mounted, it is difficult to increase the number of operation keys.

Switching between a television broadcast receiving mode (TV mode) and an external video signal reproducing mode (video mode) must be done within the picture-in-picture television receiver. If the mode switching and the channel selection effected by the tuner are associated, this makes the circuit arrangement thereof complicated. In previously proposed receivers of this type, the mode switching and the channel selection are carried out independently.

However, if separate mode switching keys and a channel selection operation mechanism are provided for the main picture and the sub-picture tuners, the number of keys is increased even more, thus making the above-mentioned disadvantages or defects more serious.

According to the present invention there is provided a television receiver in which a sub-picture screen can be inset within a main picture screen in a picture-in-picture fashion and which is able selectively to display a broadcast television channel signal (television mode) or an external base band video signal (video mode), characterised in that the television receiver comprises:

a) means for determining whether or not a picture on the sub-picture screen is in a television mode; and

b) means operative, when said picture is not in a television mode, to switch the sub-picture screen into the television mode and display a broadcast channel picture thereon in response to a sub-picture broadcast channel selection operation.

Other aspects of the invention are defined in the dependent claims.

A preferred embodiment of the invention described hereinbelow provides a picture-in-picture television receiver in which an operation section is of simplified construction so that the user can be prevented from becoming confused or at least the possibility of his becoming confused is reduced. In the preferred embodiment, the operational mode of a sub-picture can be switched positively without the necessity to provide control operation means for switching the operational mode of the sub-picture.

The invention will now be further described, by way of illustrative and non-limiting example, with reference to the accompanying drawings, in which like references designate like elements and parts throughout, and in which:

Figure 1 is a block diagram showing the entire arrangement of a television receiver embodying the present invention;

Figures 2A to 2D are respective flow charts to which reference will be made in explaining operations of reproducing main and sub-pictures in the television receiver embodying the present invention;

Figures 3A to 3D are schematic representations used to explain the operations of reproducing main and sub-pictures;

Figure 4 is a flow chart to which reference will be made in explaining a channel selection operation for selecting a sub-channel in the television receiver embodying the present invention; and

Figures 5A to 5C are schematic representations used to explain the channel selection operation.

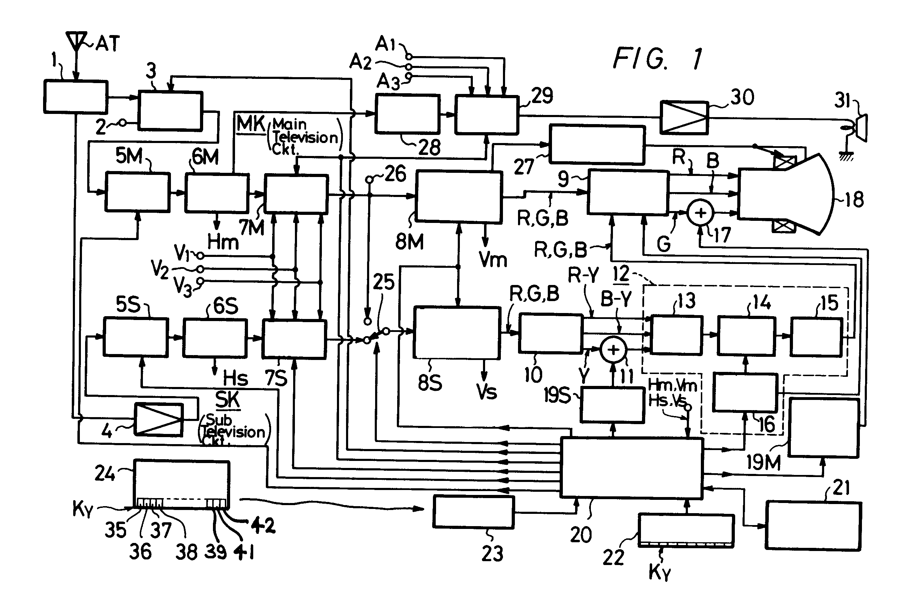

Figure 1 is a block diagram showing an overall circuit arrangement of a television receiver embodying the present invention. The television receiver includes a main television circuit MK and a sub-television circuit SK. A video signal supplied by the main television circuit MK causes a main picture to be displayed on the whole of a picture screen of a cathode ray tube 18, whereas a video signal supplied by the sub-television circuit SK causes a sub-picture to be displayed on a portion of the main picture screen in such a manner that the sub-picture is inset into the main picture. The main and sub-television circuits MK and SK include main and sub-tuners 5M, 5S, main and sub-video intermediate frequency circuits 6M, 6S and main and sub-video/chroma signal circuits 8M, 8S, respectively.

The television receiver is provided with external video signal input terminals $V_1$, $V_2$ and $V_3$ to which reproduced video signals (base band signals) from a video tape recorder VTR or the like are supplied. Selection of the video signals from the external input terminals $V_1$, $V_2$ and $V_3$, in place of the video signals from the tuners 5M and 5S, can be effected by main and sub-switching circuits 7M and 7S provided in the television circuits MK and SK. The signal selected by the switching circuit 7M is then supplied to the cathode ray tube 18 to be displayed on its picture screen.

The sub-television circuit SK includes a video signal processor circuit 12 for displaying the sub-picture on the picture screen of the cathode ray tube 18. The video signal processor circuit 12 controls the kinds of sub-picture or sub-pictures (such as a live picture, a still picture, a step-by-step picture or the like), the number of sub-pictures, the position of the sub-picture on the main picture screen, and so forth. The expression "live picture" means that the displayed image is animated (moving) rather than static (still).

The main and sub-television circuits MK and SK are provided with respective main and sub-character display circuits 19M and 19S to display picture discriminating indications on the main picture screen and the sub-picture screen, respectively, in an inset fashion. Each such indication may, for example, comprise the channel identification (for instance the channel number) of a received television broadcast or the number of an external video signal input terminal.

The television receiver includes a system controller or control circuit 20 which includes a microcomputer. Respective sections of the television receiver are controlled by the system controller 20 as will be explained in greater detail hereinafter.

The circuit arrangement of the television receiver will now be described more fully. A television broadcast signal received by an aerial (antenna) AT is supplied to a distributor 1. The distributor 1 supplies the received signal through a switching circuit 3 to the main tuner 5M, without substantially attenuating the signal, and also supplies a portion of the received signal to the sub-tuner 5S. The received signal portion is amplified by a high frequency amplifier 4 before it is applied to the sub-tuner 5S. The switching circuit 3 selectively switches between the aerial input signal from the distributor 1, and a high frequency input signal from a descrambler used for receiving a cable television broadcast or the like and supplied to an auxiliary input terminal 2, and supplies one of them to the main tuner 5M.

The video signal from the main tuner 5M is supplied to the main video intermediate frequency circuit 6M and a video intermediate frequency signal is supplied therefrom to the main switching circuit 7M which can be selectively switched between this video signal and the external video signals from the external video input terminals $V_1$ to $V_3$. The signal selected by the switching circuit 7M is supplied to the main video/chroma signal circuit 8M. A monitor output terminal 26 is connected to the output side of the main switching circuit 7M. The main video/chroma signal circuit 8M generates red, green and blue colour signals R, G and B which are fed to a switching circuit 9.

An audio intermediate frequency signal from the main video intermediate frequency circuit 6M is supplied to an audio circuit (incorporating a sound multiplexing decoder circuit) 28. An audio signal from the audio circuit 28 is supplied to a switching circuit 29 which can be selectively switched between this audio signal and external audio signals reproduced from a VTR or the like and supplied thereto from external audio signal input terminals A1, A2 and A3, respectively, corresponding to the external video signal input terminals $V_1$, $V_2$ and $V_3$. The audio signal selected by the switching circuit 29 is supplied through a low frequency amplifier 30 to a loudspeaker 31.

Horizontal and vertical synchronising signals from the main video/chroma signal circuit 8M are supplied to a deflection/high voltage circuit 27. A deflection signal and a high d c voltage from the circuit 27 are supplied to the cathode ray tube 18.

The video signal from the sub-tuner 5S is supplied to the sub-video intermediate frequency circuit 6S and a video intermediate frequency signal is supplied therefrom to the sub-switching circuit 7S which selectively switches between this video signal and the external video signals from the external video signal input terminals $V_1$ to $V_3$. A switch 25 effects selection between the video signal selected by the switching circuit 7S and the video signal from the main switching circuit 7M and supplies the chosen video signal to the sub-video/chroma signal circuit 8S. The sub-video/chroma signal circuit 8S generates red, green and blue colour signals R, G and B which are supplied to a matrix circuit 10 in which they are converted to a luminance signal Y and red and blue colour difference signals R-Y and B-Y, respectively, which are then fed to an analog-to-digital (A/D) converter 13 in the video signal processor circuit 12.

The A/D converter 13 is a time division type A/D converter as disclosed, for example, in Japanese Patent Application Publication No. JP-A-60-47792. A digital signal from the A/D converter 13 is supplied to a memory 14 and written therein. The digital signal is read out from the memory 14 and supplied to a digital-to-analog (D/A) converter 15 so as thereby to be converted to an analog signal. In the video signal processor circuit 12, sampling lines and picture elements of the video signal are selected and other lines and picture elements are thrown away or removed in correspondence with the ratio between the sizes of the main picture screen and the sub-picture screen. The memory 14 has frame (or field) memory areas corresponding to the maximum number of displayable sub-pictures, for example four frame memory areas. The memory 14 is controlled by a sub-picture controller 16 so as to specify the kinds of sub-picture or sub-pictures (such as a live picture, a still picture, a step-by-step picture and so on), the number of sub-pictures, the position of the sub-picture on the main picture and the like.

When the sub-picture is displayed as a live picture, that is a real moving picture, the video signal is alternately written in and read out from the memory 14 continuously and repeatedly; when the sub-picture is displayed as a still picture, the video signal is written in the memory 14 for a selected frame or field period and then read out from the memory 14 repeatedly; and when the sub-picture is displayed as a step-by-step picture, a plurality of video signals are written in the memory 14 at different times corresponding to different frames or field periods and then read out therefrom repeatedly (see Japanese Patent Application Publication No. JP-A-56-27573). The number of the sub-picture screens inset into the main picture screen is determined on the basis of the number of memory areas in the memory 14 which are used. The contents or picture of the sub-picture screen can be a real moving picture, a still picture or a step-by-step picture based on the video signal from the sub-video/chroma signal circuit 8S or on the video signal from the main video/chroma signal circuit 8M. The switching of these video signals is carried out by the switch 25. The picture contents on the main picture screen and the sub-picture screen can be exchanged with each other by simultaneously switching the reception channels of the main and sub-tuners 5M and 5S or by simultaneously switching the main and sub-switching circuits 7M and 7S.

The respective colour signals from the main video/chroma signal circuit 8M and the respective colour signals from the D/A converter 15 are supplied to the switching circuit 9 in which both groups of respective colour signals are switched at appropriate timing intervals such that the sub-picture screen is inset into one portion of the main picture screen at a selected, predetermined position. The switching circuit 9 is controlled by the sub-picture controller 16, which is controlled by the system controller 20. The video signal from the switching circuit 9 is supplied to the cathode ray tube 18.

The main picture discrimination indicating signal, such as a signal indicative of the main channel number, is formed by the main character display circuit 19M and is added to the video signal by an adder 17 connected between the switching circuit 9 and the cathode ray tube 18. In this example, the adder 17 is interposed only in the transmission path of the green colour signal G to thereby superimpose a green picture discrimination indication upon the main picture screen. It is of course possible for this picture discrimination indication to be made by using other colours.

The sub-picture discrimination indicating signal, which is formed by the sub-character display circuit 19S and which could be indicative of the channel number selected by the sub-tuner 5S, for example, is added to the sub-video signal by an adder 11 connected between the matrix circuit 10 and the A/D converter 13. In this example, the adder 11 is interposed only in the transmission path of the luminance signal Y to thereby superimpose a which picture discrimination indication on the sub-picture screen. However, it is possible for this picture discrimination indication to be made by using other colours.

Channel selections in the main tuner 5M and sub-tuner 5S are carried out by channel selection signals from the system controller 20. The switching circuits 3, 7M, 7S, 29 and the switch 25 are also selectively switched under the control of the system controller 20. The main and sub-video/chroma signal circuits 8M and 8S are subjected to blanking by the system controller 20 for a short period upon up and down scanning channel selection operation. Alternatively, such blanking may be carried out by a blanking switch that is provided at a stage before the cathode ray tube 18.

Further, main and sub-horizontal synchronising signals Hm and Hs from the main and sub-video intermediate frequency circuits 6M and 6S and main and sub-vertical blanking signals (vertical signals) Vm and Vs from the main and sub-video/chroma signal circuits 8M and 8S are supplied to the system controller 20. The main picture and sub-picture discrimination indicating signal circuits 19M and 195 and the sub-picture controller 16 are controlled by the system controller 20.

A last-condition memory 21 stores, under the control of the system controller 20, the selected channels of the main and sub-tuners 5M and 5S, the switch conditions of the switching circuits 7M and 7S, the control conditions of the sub-picture controller 16 and so on when power to the television receiver is turned off. When the television receiver is turned on again, the conditions of the respective circuits present when the television receiver was last turned off are displayed under the control of the system controller 20.

A key apparatus 22 is connected to the system controller 20 and is provided with various kinds of keys KY to control the television receiver.

A remote controller (commander) 24 also is provided with various kinds of keys KY to control the television receiver. The remote controller 24 is also provided with a transmitter (not shown) to transmit a remote control signal based on the corresponding key operation. A receiver 23 for receiving the signal transmitted from the tranmitter of the remote controller 24 is connected to the system controller 20. The remote control signal can be transmitted by means of a light beam, radio wave, sound wave and so on.

By way of example, the keys KY of the key apparatus 22 or the remote controller 24 may comprise: a power key; a recall key (used to display the picture discrimination indication such as the channel number); a mute key (used to mute the sound); ten keys (designated generally by the reference numeral 35) used to select the reception channel and the number of the external video signal input terminal; a TV (television)/VTR change-over key 41; an aerial input/auxiliary high frequency input change-over key; a sound multiplexing key; up and down keys 36 for incrementing and decrementing the contrast of luminance and chrominance signals, the main reception channels, the number of the main external video signal input terminal, and the sound volume, respectively; an on-off (on and off) key 37 for the sub-picture screen; up and down keys 38 for incrementing and decrementing the sub-reception channel and the number of the sub-external video signal input terminal; a still picture key; a step-by-step picture key; a shift key 42 used to shift the position of the sub-picture screen; and a main-sub exchange key 39 used to exchange the picture contents on the main picture and sub-picture screens.

The above-mentioned TV/VTR change-over key (mode change-over key) 41 effects switching between the above-mentioned broadcast receiving mode (TV mode) and the above-mentioned external video signal reproducing mode (video mode). The key or switch 41 may be so constructed as to have a toggle action as between the TV signal and the external video input terminals $V_1$, $V_2$ and $V_3$. For example, if the key 41 is pressed once the TV programme is changed to V1, and if the key is pressed again $V_1$ is changed to $V_2$, and so on. Thus, the mode is changed cyclically from TV to TV via $V_1$, $V_2$ and $V_3$. Alternatively, four individual switches for TV, $V_1$, $V_2$ and $V_3$ could be provided instead of a common TV/VTR change-over switch or key.

In this embodiment of the present invention, the same sets of control keys are generally provided for the sub-picture screen as are provided for controlling the display of the main picture screen. However, for the reasons given at the outset of this description, ten keys for selecting the sub-channel and a TV/VTR change-over key are not provided.

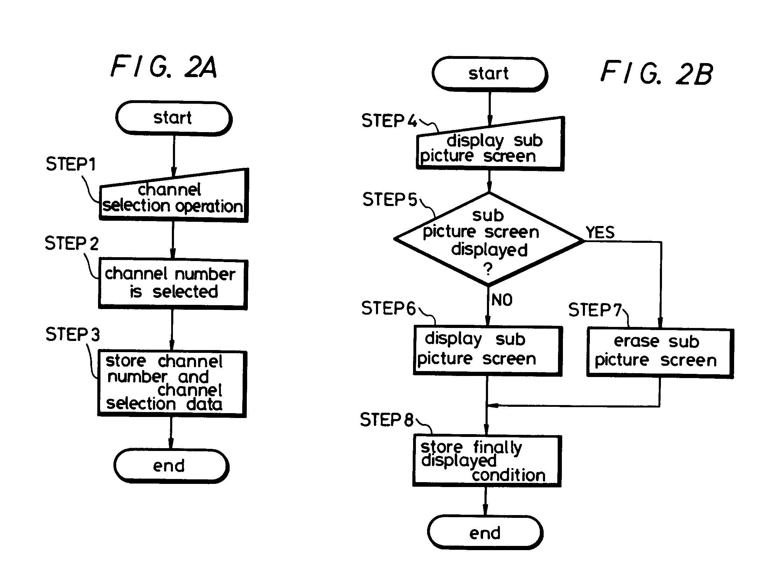

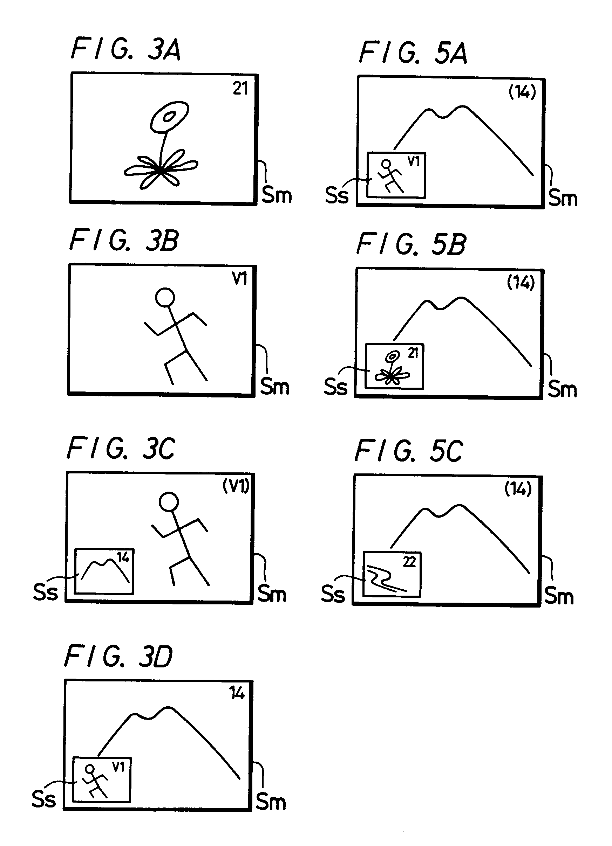

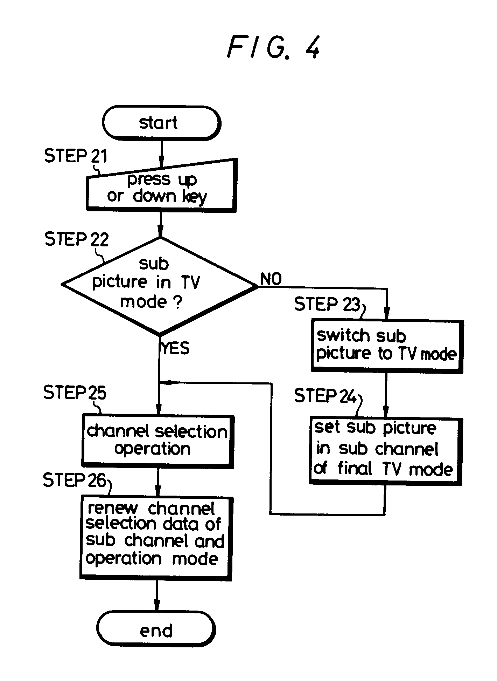

The operation of the main and sub-pictures according to the above-described embodiment of the present invention will now be described with reference to flow charts (Figures 2A to 2D) and schematic diagrams (Figures 3A to 3D). It will be understood that the steps described are followed by the system controller 20 which causes each of the steps now to be described to be carried out.

The main picture is displayed first. In this case, when the mode change-over key 41 of the remote controller 24 is switched to the TV mode, depressing any one of the channel selection operation keys, that is the ten keys 35 or the up key or downs key 36, increments or decrements the main channel number of the main tuner 5M to carry out a channel selection operation as shown in Figure 2A (at a step 1). Then, a channel number ("21", for example) is selected as the main channel (at a step 2) under the control of the system controller 20. This channel number and the channel selection data are then stored in the last condition memory 21 (at a step 3). Thereafter, as shown in Figure 3A, the picture of the channel number "21" is displayed on a main picture screen Sm of the cathode ray tube 18 and the channel number (channel or picture discriminating indication) "21" also is displayed thereon.

When the mode change-over key 41 of the remote controller 24 is depressed again to cause a change-over to the video mode and, for example, the video input terminal $V_1$ is selected as the main external video signal source, then the number (picture discriminating indication) "$V_1$" of this main

external video signal source is also stored in the last condition memory 21 independently from the main channel number setting of the main tuner 5M. Then, as shown in Figure 3B, the picture corresponding to the video signal from the source $V_1$ is displayed on the main picture screen Sm and the number "$V_1$" of this external video signal source also is delayed thereon.

A sub-picture can be subsequently displayed. In this case, at a first stage, as shown in Figure 2B, when the on-off key 37 of the sub-picture screen on the remote controller 24 is depressed (at a step 4), the system controller 20 determines whether or not a sub-picture screen is displayed (at a step 5). If a sub-picture screen is not displayed, a sub-picture screen is thereafter displayed and the sub-picture is displayed thereon (at a step 6). If, however, a sub-picture screen is being displayed when the on-off key 37 is depressed, the sub-picture screen (and the sub-picture) is erased (at a step 7). Thus, each time the sub-picture screen on-off key 37 is depressed, the displayed condition of the sub-picture screen is inverted. The final displayed condition is stored each time in the last condition memory 21 (at a step 8).

Further, if the up or down key 38 of the remote controller 24 for incrementing or decrementing the sub-channel number is depressed when the picture corresponding to the video signal from the sub-tuner 5S is displayed on the sub-picture screen, the channel selection operation shown in Figure 2A is carried out, thus selecting, for example, the channel number "14" as the sub-channel. The channel number (or the number of the external video source) is stored in the last condition memory 21, in similar manner to the case of the main channel.

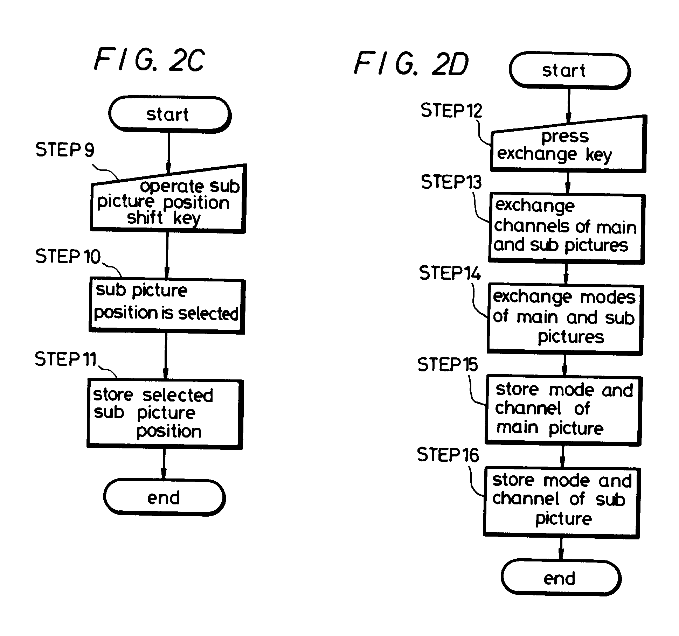

The display position of the sub-picture screen can be selected by the user. As shown in Figure 2C, when the sub-picture position shift key 42 of the remote controller 24 is operated (at a step 9), the lower left-hand side corner (for example) is selected from the four corners of the main picture screen Sm in response to the aforementioned operation (at a step 10) and this selected position is stored in the last condition memory 21 (at a step 11).

In this way, as shown in Figure 3C, the picture of the channel number "14" is displayed on a sub-picture screen Ss positioned at the lower left-hand side corner of the main picture screen Sm as the sub-picture and, also, its channel number "14" is displayed thereon.

Also in this embodiment, the main and sub-pictures can be exchanged with each other. As shown in Figure 2D, when the main/sub-exchange key 39 of the remote controller 24 for exchanging the main and sub-pictures is depressed (at a step 12), the respective channel selection data of the main tuner 5M and the sub-tuner 5S or the external signal input selection for the main picture and the sub-picture which are stored in the last condition memory 21 are exchanged one after another by the system controller 20 and the operation mode data thereof are also exchanged, thereby exchanging the channels, the external signal input selection and the modes of the main and the sub-pictures (at steps 13 and 14). In the previously mentioned case, the main channel number was "21" the external video signal input source selected for the main picture was that connected to the terminal $V_1$, the sub-channel number was "14", the main picture was set in the video mode and the sub-picture was set in the TV mode, Thus, by virtue of the exchange operation, the condition data stored at a step 15 for the main picture is the TV mode with the channel number being "14", and the condition data stored at a step 16 for the sub-picture is the video mode with the input signal selection being $V_1$. As a result, as shown in Figure 3D, the relationship between the main picture and the sub-picture becomes precisely opposite to that shown in Figure 3C.

The channel number and the external video signal number as described above are displayed on the respective picture screens Sm and Ss during a time period of, for example, several seconds each time various kinds of keys are operated.

The channel selection of the sub-channel according to the above-described embodiment of the present invention will now be described with reference to Figures 4 and 5A to 5C.

Figure 4 is a flow chart showing how the channel selection operation of the sub-channel is effected. Referring to Figure 4, when the sub-channel up or down key 38 is depressed (at a step 21), the system controller 20 determines whether or not the sub-picture is set in the TV mode (at a step 22).

As shown in Figure 5A, when the television receiver is set in the same state as described above in connection with Figure 3D, namely the main picture is in the TV mode and the sub-picture is in the video mode, then, in response to activation of the sub-channel up or down key 38, the operational mode of the sub-picture is automatically switched to the TV mode (at a step 23) without any necessity for depressing the mode change-over key 41. In accordance with this embodiment, when the operational mode is switched to the TV mode, the last condition memory 21 functions to first set the sub-picture at the channel number ("21" in the example given above) which was stored in the memory 21 when the sub-picture was last in the TV mode (at a step 24).

Since the sub-channel number just after the main and sub-pictures were exchanged was "21", as described above, the condition of the memory 21 is such that the picture of the channel number "21" will be displayed on the sub-picture screen Ss and the number "21" of the sub-channel also will be displayed thereon, as shown in Figure 5B. (Figure 5B shows only the memory condition and not an actual display.)

From this state, the channel selection operation is moved to the inherent channel selection operation and a channel number ("22", for example) is selected as the sub-channel (at a step 25) when the up key 38 is pressed at the step 21. Then, as shown in Figure 5C, the picture of the channel "22" is displayed on the sub-picture screen Ss and its channel number "22" also is displayed thereon.

If, instead of being in the video mode, the sub-picture is set in the TV mode when the sub-channel number up or down key 38 of the remote controller 24 is operated, then the sub-channel selection operation is immediately started and a desired sub-channel is selected (at a step 25).

The operational mode of the sub-picture and the channel selection data of the sub-channel changed in response to the channel selection operation and so on are then up-dated and stored in the last condition memory 21 (at a step 26).

In this embodiment, when only the sub-picture is changed as mentioned above, the external video source number of the channel number of only the sub-picture is displayed and the channel number or the external video source number of the main picture is not displayed.

Furthermore, when the sub-picture is set in the video mode, the sub-picture is automatically changed-over to the TV mode by the channel selection key operation of the sub-channel. Thus, an operational mode change-over or switching key 41 for the sub-picture can be omitted, thus simplifying operation for the viewer and preventing the user from being confused.

Further, in this embodiment, as shown in Figure 5A, when the main picture is set in the TV mode and the sub-picture is set in the video mode, when the power supply to the television receiver is turned off and then, later the television receiver is turned on again, the microcomputer within the system controller 20 is reset and after a standby time of, for example, 0.3 seconds, the operational conditions of the respective sections of the television receiver stored in the last condition memory 21 are displayed. At that time, if the video signal is not supplied from the external video signal source, then the sub-vertical signal Vs from the sub-video/chroma signal circuit 85 is dropped and the sub-picture is disordered. Accordingly, even if the sub-picture discriminating indication signal is generated by the sub-character display circuit 19S, the character displayed thereon by this indication signal is unreadable. Even in such a case, if the sub-channel up key or down key 38 of the remote controller 24 is operated, the neighbouring picture channel ("22" in the example given above) when the sub-picture was last set in the TV mode is displayed (Figure 5C), thus preventing the user from being confused.

According to the embodiment of the present invention set forth above in detail, since the video mode of the sub-picture is changed-over to the TV mode by operating the up key or down key 38 used in the channel selection of the sub-channel, it becomes possible to provide a picture-in-picture television receiver in which a mode change-over or operation key 41 used to switch the operational mode of the sub-picture can be removed to thereby prevent the user from being confused.

In the above-described embodiment of this invention the external video source can be displayed in the sub-picture screen or area only by means of the main/sub-exchange key 39, because the TV/external video mode change-over key for the sub-picture is omitted for the sake of simplicity.

Therefore, when the viewer wants to watch a picture of an external video source on the sub-picture screen or area, the viewer should select the picture of the external video first on the main picture and then the viewer should depress the main/sub change-over key 39.

Since it rarely happens that the viewer wants to start off by viewing pictures of the external video source on the sub-picture area, the omission of a sub-channel mode change-over key poses little inconvenience to the viewer and has the advantages of simplicity of operation and compactness of the remote controller 24.

**Claims**

1. A television receiver in which a sub-picture screen (Ss) can be inset within a main picture screen (Sm) in a picture-in-picture fashion and which is able selectively to display a broadcast television channel signal (television mode) or an external base band video signal (video mode), characterised in that the television receiver comprises:
   a) means (20, 7S) for determining whether or not a picture on the sub-picture screen (Ss) is in a television mode; and
   b) means (20, 7S, 38) operative, when said picture is not in a television mode, to switch the sub-picture screen (Ss) into the television mode and display a broadcast channel (5S) picture thereon in response to a sub-picture broadcast channel (5S, 38) selection operation.

2. A television receiver according to claim 1, comprising:

(a) a cathode ray tube (18) having a picture screen which is divisible into the main picture screen (Sm) and at least one sub-picture screen (Ss) inset into the main picture screen (Sm);

(b) a main picture circuit (7M, 8M) for selecting a first video signal from a plurality of video signals (5M, 6M, $V_1$, $V_2$, $V_3$) and supplying the selected video signal as a video signal for the main picture screen (Sm);

(c) a sub-picture circuit (7S, 25, 8S) for selecting a second video signal from a plurality of video signals, including television channel signals (5S) and external base band video signals ($V_1$ $V_2$, $V_3$) and supplying the second video signal as a sub-picture video signal for the sub-picture screen (Ss) or at least one of the sub-picture screens inset into the main picture screen (Sm) of the cathode ray tube (18), the sub-picture circuit (7S, 25, 8S) including viewer controllable sub-picture channel selection means (5S, 20, 38) for selecting the second video signal from among the television channel signals (5S); and

(d) a composing circuit (9) for composing the selected video signal for the main picture screen (Sm) and the selected video signal for the sub-picture screen (Ss) into a composite signal to be supplied to the cathode ray tube (18); wherein the means for determining and the means operative to switch and display function in response to activation of the viewer controllable sub-picture channel selection means.

3. A television receiver according to claim 2, wherein the means operative to switch and display causes the sub-picture circuit (7S, 25, 8S) to select the television mode for the sub-picture screen (Ss) when the viewer controllable sub-picture channel selection means (5S, 20, 38) is activated even if the external source fails to supply base band video signals ($V_1$, $V_2$, $V_3$).

4. A television receiver according to claim 2 or claim 3, comprising last condition memory means (21) for storing data representing whether the sub-picture circuit (7S, 25, 8S) is operating in the television mode or in the video mode and the particular signal selected as the second video signal by the sub-picture circuit (7S, 25, 8S) each time that the viewer controllable sub-picture channel selection means (5S, 20, 38) is activated.

5. A television receiver according to claim 4, wherein, when power is applied to the television receiver, the means operative to switch and display interrogates the last condition memory means (21) and causes the sub-picture circuit (7S, 25, 8S) to select the same second video signal source as when power to the television receiver was last turned off.

6. A television receiver according to any one of the preceding claims, comprising viewer operable means (39, 20) for causing the displays of the main picture screen (Sm) and the sub-picture screen (Ss) to be exchanged.

**Patentansprüche**

1. Fernsehempfänger, bei dem ein Nebenbild-Bildschirm (Ss) innerhalb eines Hauptbild-Bildschirms (Sm) in einer Bild-in-Bild-Art eingesetzt sein kann und welcher in der Lage ist, wahlweise ein Fernsehsenderkanal-Signal (Fernseh-Betriebsart) oder ein externes Basisband-Videosignal (Video-Betriebsart) anzuzeigen, dadurch **gekennzeichnet,** daß der Fernsehempfänger umfaßt:

(a) Mittel (20, 7S) zum Bestimmen, ob sich ein Bild auf dem Nebenbild-Bildschirm (Ss) in einer Fernseh-Betriebsart befindet oder nicht befindet, und

(b) Mittel (20, 7S, 38, die betreibbar sind, wenn sich das Bild nicht in einer Fernseh-Betriebsart befindet, um den Nebenbild-Bildschirm (Ss) in die Fernseh-Betriebsart umzuschalten und um ein Fernsehsenderkanal (5S)-Bild darauf in Reaktion auf einen Nebenbild-Fernsehsenderkanal (5S, 38)-Auswahloperation anzuzeigen.

2. Fernsehempfänger nach Anspruch 1, der umfaßt:

(a) eine Kathodenstrahlröhre (18), die einen Bildschirm hat, der in den Hauptbild-Bildschirm (Sm) und zumindest einen Nebenbild-Bildschirm (Ss), der in den Hauptbild-Bildschirm (Sm) eingesetzt ist, unterteilbar ist,

(b) eine Hauptbild-Schaltung (7M, 8M) zum Auswählen eines ersten Videosignals aus einer Vielzahl von Videosignalen (5M, 6M, $V_1$, $V_2$, $V_3$) und zum Liefern des ausgewählten Videosignals als ein Videosignal für den Hauptbild-Bildschirm (Sm),

(c) eine Nebenbild-Schaltung (7S, 25, 8S) zum Auswählen eines zweiten Videosignals aus einer Vielzahl von Videosignalen, die Fernsehkanal-Signale (5S) und externe Basisband-Video-signale (V$_1$, V$_2$, V$_3$) enthalten, und zum Liefern des zweiten Videosignals als ein Nebenbild-Videosignal für den Nebenbild-Bildschirm (Ss) oder zumindest einen der Nebenbild-Bildschirme, die in den Hauptbild-Bildschirm (Sm) der Kathodenstrahlröhre (18) eingesetzt sind, wobei die Nebenbild-Schaltung (7S, 25, 8S) ein durch den Betrachter steuerbares Nebenbildkanal-Auswahlmittel (5S, 20, 38) zum Auswählen des zweiten Videosignals aus den Fernsehkanal-Signalen (5S) enthält, und

(d) eine Zusammensetzungsschaltung (9) zum Zusammensetzen des ausgewählten Videosignals für den Hauptbild-Bildschirm (Sm) und des ausgewählten videosignals für den Nebenbild-Bildschirm (Ss) zu einem zusammengesetzten Signal, das der Kathodenstrahlröhre (18) zuzuführen ist, wobei die Mittel zum Bestimmen und die Mittel, die betreibbar sind, um umzuschalten und anzuzeigen, in Reaktion auf ein Wirksammachen des durch den Betrachter steuerbaren Nebenbildkanal-Auswahlmittels arbeiten.

3. Fernsehempfänger nach Anspruch 2, bei dem die Mittel, die betreibbar sind, um umzuschalten und anzuzeigen, die Nebenbild-Schaltung (7S, 25, 8S) dazu veranlassen, die Fernseh-Betriebsart für den Nebenbild-Bildschirm (Ss) auszuwählen, wenn das durch den Betrachter steuerbare Nebenbildkanal-Auswahlmittel (5S, 20, 38) wirksam gemacht ist, selbst wenn die externe Quelle nicht in der Lage ist, Basisband-Videosignale (V$_1$, V$_2$, V$_3$) zu liefern.

4. Fernsehempfänger nach Anspruch 2 oder Anspruch 3, der ein Letztzustands-Speichermittel (21) zum Speichern von Daten umfaßt, die jedesmal dann, wenn das durch den Betrachter steuerbare Nebenbildkanal-Auswahlmittel (5S, 20, 38) wirksam gemacht ist, angeben, ob die Nebenbild-Schaltung (7S, 25, 8S) in der Fernseh-Betriebsart oder in der Video-Betriebsart arbeitet und das spezielle Signal als das zweite Videosignal durch die Nebenbild-Schaltung (7S, 25, 8S) ausgewählt ist.

5. Fernsehempfänger nach Anspruch 4, bei dem wenn der Fernsehempfänger eingeschaltet wird, die Mittel, die betreibbar sind, um umzuschalten und anzuzeigen, das Letztzustands-Speichermittel (21) abfragen und die Nebenbild-Schaltung (7S, 25, 8S) veranlassen, dieselbe zweite Videosignal-Quelle auszuwählen, die ausgewählt war, als der Fernsehempfänger zuletzt ausgeschaltet wurde.

6. Fernsehempfänger nach einem der vorhergehenden Ansprüche, der ein durch den Betrachter betätigbares Mittel (39, 20) zum Bewirken, daß die Anzeigen des Hauptbild-Bildschirms (Sm) und des Nebenbild-Bildschirms (Ss) vertauscht werden, umfaßt.

**Revendications**

1. Récepteur de télévision dans lequel un écran de sous-image (Ss) peut être incrusté dans un écran d'image principale (Sm), à la manière d'une image dans l'image et qui permet de sélectivement afficher un signal de canal de télévision diffusé (mode de télévision) ou un signal vidéo en bande de base extérieur (mode vidéo), caractérisé en ce qu'il comporte :

a) un dispositif (20, 7S) destiné à déterminer si une image sur l'écran de sous-image (Ss) se trouve ou non dans le mode de télévision ; et

b) un dispositif (20, 7S, 38) ayant pour fonction, quand ladite image n'est pas dans le mode de télévision, de commuter l'écran de sous-image (Ss) dans le mode de télévision et d'afficher une image de canal de diffusion (5S) sur lui en réponse à une opération de sélection de canal de sous-image diffusée (5S, 38).

2. Récepteur de télévision selon la revendication l, comportant :

(a) un tube à rayons cathodiques (18) ayant un écran d'image pouvant être divisé en un écran d'image principale (SM) et au moins un écran de sous-image (Ss) incrusté dans ledit écran d'image principale (Sm) ;

(b) un circuit d'image principale (7M, 8M) destiné à sélectionner un premier signal vidéo parmi plusieurs signaux vidéo (5M, 5M, V$_1$, V$_2$, V$_3$) et fournissant le signal vidéo sélectionné comme un signal vidéo pour l'écran d'image principale (Sm);

(c) un circuit de sous-image (7S, 25, 8S) destiné à sélectionner un second signal vidéo parmi plusieurs signaux vidéo, comprenant des signaux de canaux de télévision (5S) et des signaux vidéo en bande de base extérieurs (V$_1$, V$_2$, V$_3$) et fournissant le second signal vidéo comme un signal vidéo de sousimage à l'écran de sous-image ou à l'un au moins des écrans de sous-image incrustés dans l'écran d'image principale (Sm) du tube à rayons cathodiques (18), le circuit de sous-image (7S, 25, 8S) comprenant un dispositif de sélection de canaux de sous-image commandé par le téléspectateur (5S, 20, 38) destiné à sélectionner le second signal vidéo parmi les signaux de canaux de télévision (5S) ; et

(d) un circuit de composition (9) destiné à composer le signal vidéo sélectionné pour l'écran d'image principal (Sm) et le signal vidéo sélectionné pour l'écran de sous-image (Ss ) en un signal composite qui doit être fourni au tube à rayons cathodiques (18) ; dans lequel

le dispositif de détermination et le dispositif ayant pour fonction de commuter et d'afficher fonctionnant en réponse à la manoeuvre du dispositif de sélection de canal de sous-image commandé par le téléspectateur.

3. Récepteur de télévision selon la revendication 2, dans lequel le dispositif ayant pour fonction de commuter et d' afficher entraîne que le circuit de sous-image (7S, 25, 8S) sélectionne le mode de télévision pour l'écran de sous-image (Ss) quand le dispositif de sélection de canal de sous-image commandé par le téléspectateur (5S, 20, 38) est actionné même si l a source extérieure ne fournit pas les signaux vidéo en bande de base (V$_1$ , V$_2$, V$_3$).

4. Récepteur de télévision selon la revendication 2 ou la revendication 3, comportant un dispositif de mémoire de dernier état (21) destiné à mémoriser des données indiquant si le circuit de sousimage (7S, 25, 8S) fonctionne dans le mode de télévision ou dans le mode vidéo et le signal particulier sélectionné comme le second signal vidéo par le circuit de sous-image (7S, 25, 8S) chaque fois que le dispositif de sélection de canal de sous-image commandé par le téléspectateur (5S, 20, 38) est actionné.

5. Récepteur de télévision selon la revendication 4, dans lequel, lorsque l'alimentation est appliquée au récepteur de télévision, le dispositif ayant pour fonction de commuter et d'afficher interroge le dispositif à mémoire de dernier état (21) et entraîne que le circuit de sous-image (7S, 25, 8S) sélectionne la même seconde source de signaux vidéo que lorsque l'alimentation du récepteur de télévision a été coupée en dernier.

6. Récepteur de télévision selon l'une quelconque des revendications précédentes, comportant un dispositif pouvant être actionné par le téléspectateur (39, 20) pour entraîner l'interversion des affichages de l'écran d image principal (Sm) et de l'écran de sous-image (Ss).

FIG. 1

## FIG. 2A

```
        ┌─────────────┐
        │    start    │
        └─────────────┘
               │
               ▼
STEP1   ┌─────────────┐
        │   channel    │
        │selection operation│
        └─────────────┘
               │
               ▼
STEP2   ┌─────────────┐
        │channel number│
        │ is selected  │
        └─────────────┘
               │
               ▼
STEP3   ┌─────────────┐
        │store channel │
        │number and    │
        │      channel │
        │selection data│
        └─────────────┘
               │
               ▼
        ┌─────────────┐
        │     end      │
        └─────────────┘
```

## FIG. 2B

```
                ┌─────────────┐
                │    start     │
                └─────────────┘
                       │
                       ▼
STEP4    ┌──────────────────┐
         │ display sub       │
         │ picture screen    │
         └──────────────────┘
                       │
                       ▼
STEP5         ◇ sub                   YES
           picture screen ──────────────┐
             displayed                   │
                 ?                       │
                 │NO                     │
                 ▼                       ▼
STEP6    ┌──────────────┐    STEP7  ┌──────────────┐
         │ display sub  │           │ erase sub    │
         │ picture screen│          │ picture screen│
         └──────────────┘           └──────────────┘
                 │                       │
                 ▼◄──────────────────────┘
STEP8    ┌──────────────┐
         │store finally │
         │displayed     │
         │      condition│
         └──────────────┘
                 │
                 ▼
         ┌──────────────┐
         │     end       │
         └──────────────┘
```

EP 0 229 032 B1

## FIG. 2C

```
         ┌──────────────┐
         │    start     │
         └──────┬───────┘
                │
STEP 9          │
         ╱──────────────╲
        │   operate sub  │
        │ picture position│
        │   shift  key   │
         ╲──────────────╱
                │
STEP 10         │
         ┌──────────────┐
         │ sub picture   │
         │ position is selected│
         └──────┬───────┘
                │
STEP 11         │
         ┌──────────────┐
         │ store selected│
         │ sub  picture  │
         │   position    │
         └──────┬───────┘
                │
         ┌──────────────┐
         │     end      │
         └──────────────┘
```

## FIG. 2D

```
         ┌──────────────┐
         │    start     │
         └──────┬───────┘
                │
STEP 12         │
         ╱──────────────╲
        │     press      │
        │  exchange key  │
         ╲──────────────╱
                │
STEP 13         │
         ┌──────────────┐
         │ exchange      │
         │ channels of main│
         │ and sub pictures│
         └──────┬───────┘
                │
STEP 14         │
         ┌──────────────┐
         │ exchange modes│
         │ of main and sub│
         │    pictures   │
         └──────┬───────┘
                │
STEP 15         │
         ┌──────────────┐
         │ store mode and│
         │ channel  of   │
         │ main  picture │
         └──────┬───────┘
                │
STEP 16         │
         ┌──────────────┐
         │ store mode and│
         │ channel of sub│
         │   picture     │
         └──────┬───────┘
                │
         ┌──────────────┐
         │     end      │
         └──────────────┘
```

EP 0 229 032 B1

FIG. 3A

FIG. 5A

FIG. 3B

FIG. 5B

FIG. 3C

FIG. 5C

FIG. 3D

# FIG. 4

start

STEP 21 — press up or down key

STEP 22 — sub picture in TV mode ?  — NO

YES

STEP 23 — switch sub picture to TV mode

STEP 25 — channel selection operation

STEP 24 — set sub picture in sub channel of final TV mode

STEP 26 — renew channel selection data of sub channel and operation mode

end